(19) Europäisches Patentamt / European Patent Office / Office européen des brevets

(11) **EP 2 562 511 B1**

(12) **EUROPEAN PATENT SPECIFICATION**

(45) Date of publication and mention
of the grant of the patent:
**09.09.2015 Bulletin 2015/37**

(51) Int Cl.:
***G01B 5/25*** *(2006.01)*

(21) Application number: **12175575.5**

(22) Date of filing: **09.07.2012**

(54) **Method of aligning rotating shafts of rotary machines with each other**

Verfahren zum Ausrichten von Drehwellen von Drehmaschinen miteinander

Procédé d'alignement d'arbres rotatifs de machines rotatives les uns avec les autres

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2011 TW 100130228**

(43) Date of publication of application:
**27.02.2013 Bulletin 2013/09**

(73) Proprietor: **China Steel Corporation
81233 Kaohsiung (TW)**

(72) Inventor: **Yeh, Wen-An
830 Kaohsiung City (TW)**

(74) Representative: **Puschmann Borchert Bardehle
Patentanwälte Partnerschaft mbB
Postfach 10 12 31
80086 München (DE)**

(56) References cited:
**DE-A1- 3 911 307      US-A- 4 586 264
US-A- 5 263 261**

• **DURKIN D: "ALIGNING SHAFTS PART I-
MEASURING MISALIGNMENT", PLANT
ENGINEERING, CAHNERS PUB., NEWTON, MA,
US, 11 January 1979 (1979-01-11), pages 102-105,
XP008024662, ISSN: 0032-082X**
• **DURKIN D: "ALIGNING SHAFTS PART II-
CORRECTING MISALIGNMENT", PLANT
ENGINEERING, CAHNERS PUB., NEWTON, MA,
US, 8 February 1979 (1979-02-08), pages 102-105,
XP008024663, ISSN: 0032-082X**

## Description

The present invention relates to a method of aligning the rotating shafts of two rotary machines with each other.

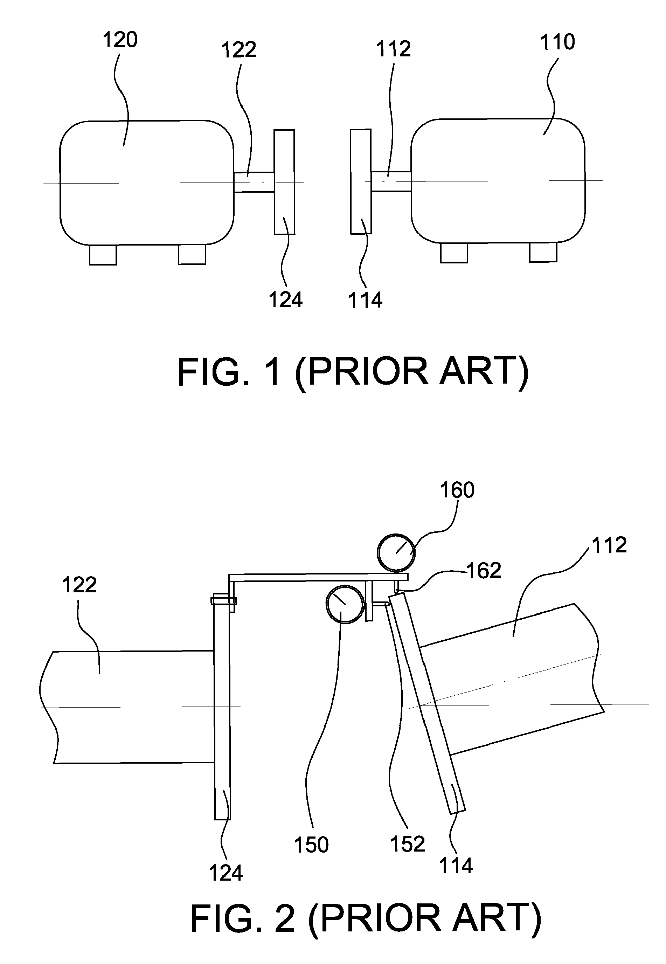

Referring to Fig. 1, when a rotary machine 110, such as a motor is prepared to transmit power to another rotary machine 120, such as a water pump, the flange 114 at the rotating shaft 112 of the rotary machine 110 is required to connect with the flange 124 at the rotating shaft 122 of the rotary machine 120. In this arrangement the rotating shaft 112 of the rotary machine 110 may drive the rotating shaft 122 of the rotary machine 120 to rotate.

In order to transmit power efficiently, it is required to align the rotating shaft 112 of the rotary machine 110 with the rotating shaft 122 of the rotary machine 120 before connecting with each other. More specifically, it is best that the rotation axis of the rotating shaft 112 of the rotary machine 110 is arranged to coincide with that of the rotating shaft 122 of the rotary machine 120.

Referring to Fig. 2, if desiring to know how much the rotation axis of the rotating shaft 112 of the rotary machine 110 deviates from that of the rotating shaft 122 of the rotary machine 120, two gauges 150, 160 are connected to the flange 124 of the rotary machine 120. In addition, it is arranged that the probe 162 of the gauge 160 is in contact with the lateral surface of the flange 114 of the rotary machine 110 and the probe 152 of the gauge 150 is in contact with the front surface of the flange 114. Afterward, the gauges 150, 160 are positioned to be topmost. It may be called that both the gauges 150, 160 are at 12 o'clock position. At this position the gauges 150, 160 have readout values of A'0 and R'0, respectively.

Next, the rotating shafts 122, 112 are rotated with 90 degrees. For example, the rotating shafts 122, 112 are rotated clockwise with 90 degrees. It may be called that the gauges 150, 160 are at 3 o'clock position. At this position the gauges 150, 160 have readout values of A'1 and R'1, respectively. Subsequently, the rotating shafts 122, 112 are rotated clockwise with another 90-degree. It may be called that the gauges 150, 160 are at 6 o'clock position. At this position the gauges 150, 160 have readout values of A'2 and R'2, respectively. Finally, the rotating shafts 122, 112 are rotated clockwise with 90 degrees again. It may be called that the gauges 150, 160 are at 9 o'clock position. At this position the gauges 150, 160 have readout values of A'3 and R'3, respectively.

According to the above method, the difference between the R'0 and R'2 indicates a shift of the center of the flange 114 with respect to the center of the flange 124 in the vertical direction. If the R'2 is greater than the R'0, it indicates that the center of the flange 114 has a downward shift with respect to the center of the flange 124. An upward shift in a distance of (R'2-R'0)/2 may be exerted on the flange 114 to correct such a downward shift. However, when the R'0 is greater than the R'2, it indicates that the center of the flange 114 has an upward shift with respect to the center of the flange 124. Therefore, a downward shift in a distance of (R'0-R'2)/2 may be exerted on the flange 114 to correct such an upward shift. Similarly, the difference between the R'1 and R'3 indicates a shift of the center of the flange 114 with respect to the center of the flange 124 in the horizontal direction. When the R'3 is greater than the R'1, it indicates that the center of the flange 114 has a leftward shift with respect to the center of the flange 124. A rightward shift in a distance of (R'3-R'1)/2 may be exerted on the flange 114 to correct such a leftward shift. However, when the R'1 is greater than the R'3, it indicates that the center of the flange 114 has a rightward shift with respect to the center of the flange 124. Therefore, a leftward shift in a distance of (R'1-R'3)/2 may be exerted on the flange 114 to correct such a rightward shift.

According to the above method, when the A'0, A'1, A'2 and A'3 are not equal to each other, it indicates that the front surface of the flange 114 is not parallel to the front surface of the flange 124. When the A'2 is greater than the A'0, it indicates that the 6 o'clock position of the front surface of the flange 114 is closer to the front surface of the flange 124 than the 12 o'clock position of the front surface of the flange 114. To have the front surface of the flange 114 parallel to the front surface of the flange 124, the flange 114 may be adjusted in such a manner that the 12 o'clock position keeps unmoved and the 6 o'clock position is moved away from the front surface of the flange 124 in a distance of (A'2-A'0). Alternatively, the flange 114 may be adjusted such that the 6 o'clock position keeps unmoved and the 12 o'clock position is moved close to the front surface of the flange 124 in the distance of (A'2-A'0). If the A'0 is greater than the A'2, it indicates that the 12 o'clock position of the front surface of the flange 114 is closer to the front surface of the flange 124 than the 6 o'clock position of the front surface of the flange 114.

the front surface of the flange 114. To have the front surface of the flange 114 parallel to the front surface of the flange 124, the flange 114 may be adjusted in such a manner that the 3 o'clock position keeps unmoved and the 9 o'clock position is moved away from the front surface of the flange 124 in a distance of (A'3-A'1). Alternatively, the flange 114 may be adjusted such that the 9 o'clock position keeps unmoved and the 3 o'clock position is moved close to the front surface of the flange 124 in the distance of (A'3-A'1). If the A'1 is greater than the A'3, it indicates that the 3 o'clock position of the front surface of the flange 114 is closer to the front surface of the flange 124 than the 9 o'clock position of the front surface of the flange 114.

DE 39 11 307 A1 teaches a method for checking tandem-arranged shafts to detect angular and/or parallel offset between the center axes of the shafts using at least one pair elements made up of an indicating pointer which is fixed in relation to one of the shafts and is generally parallel to its center axis and of a reference element fixedly attached to the other shaft, in a plurality of angular positions of measurement of the shafts, which correspond to each other from shaft to shaft, for the production of two mutually independent alignment data signals, which respectively correspond, in a manner related to the respective angular position of measurement, to a component of the minimum distance apart of the center axes of the shafts, i.e. the parallel offset, and to a component of the maximum angle between such center axes, i.e. the angular offset.The shafts are turned into at least five different and freely selected angular positions of measurement, in which measurements are taken. The signals produced on taking such measurements are treated as vectors with the same origin or, respectively, pairs of values in a plane coordinate system. In a computer, a process of calculation is performed on the basis of points of measurement given by the ends of the vectors or, respectively, the pairs of values to obtain the characteristic data of the curve which would be produced by a rotation of the shafts through 360°. Such process takes into account the fact that for geometrical reasons the points of measurement are practically only able to originate from a curve corresponding to an ellipse but are subject to mensuration uncertainties, and such process using an optimizing method. The angular position in space of at least one of these angular positions of measurement is ascertained and, a computer is used to ascertain the position in space of the shafts in relation to each other and obtain correction values for the positional correction thereof in order to eliminate any alignment error detected on the basis of the characteristic data of the curve taking into account the ascertained angular

DURKIN D: "ALIGNING SHAFTS PART I - MEASURING MISALIGNMENT", PLANT ENGINEERING, CAHNERS PUB., NEWTON, MA, US, 11 January 1979 (1979-01-11), pages 102-105, XP008024662, ISSN: 0032-082X teaches that the adjustment required to correct misalignment will consist of an offset move at both shim points, plus an angular swing about an imaginary pivot point on the face of the coupling of the movable machine. These will be combined into a single horizontal and vertical adjustment for each shim point. The amount of the offset move will be equal to the offset misalignment as shown on the front of the sheet. This information should be written in the appropriate table on the back of the sheet. The offset move is always the same for both shim points.

DURKIN D: "ALIGNING SHAFTS PART II - CORRECTING MISALIGNMENT", PLANT ENGINEERING, CAHNERS PUB., NEWTON, MA, US, 8 February 1979 (1979-02-08), pages 102-105, XP008024663, ISSN: 0032-082X teaches that the purpose of aligning connected machines is to eliminate unnecessary mechanical stresses in shafts and couplings. Disregarding the proper approach to good alignment is likely to introduce additional stresses, with subsequent damage to couplings, bearings, and shafts. Flexible couplings are very popular because they can compensate for slight misalignment. This capability does not, however, justify initial alignment that is less than perfect. Thermal expansion, settling of foundations, and deflections in frames under load after machines are put into operation may require the full misalignment capacity of the couplings. Because there are two types of misalignment, two sets of measurements are required-one to determine the amount of offset misalignment and the other to determine the amount of angular misalignment. Because both types of misalignment occur in both the horizontal and the vertical planes, horizontal and vertical readings of both types (top-to-bottom and side-to-side) are needed.

US 4 586 264 A discloses a method for determining alignment of a first shaft and a second shaft coupled together by a coupling comprising the steps of: a. suspending a first dial indicator gauge having a pin type contact over the second shaft so that its pin type contact abuts one of the second shaft and a portion of the coupling generally parallel to the second shaft; b. suspending a second dial indicator gauge having a pin type contact over the first shaft so that its pin type contact abuts one of the first shaft and a portion of the coupling generally parallel to the first shaft; c. taking a reading r1 on the first dial indicator gauge; d. taking a reading r2 on the second indicator gauge; e. measuring the horizontal distance d1 between the first gauge and the second gauge; f. determining angularity between the first shaft and the second shaft by solving: Angularity=(r1 +r2)/2d1; and g. comparing the angularity to a predetermined set of acceptable angularity values.

US 5 263 261 A relates to acquiring offset data for aligning co-rotatable in-line machine shafts. Two sets of offset data, each set for example representing relative displacement in a radial direction between a reference point referenced to one of the shafts and a particular point on the other of the shafts at given angular positions, are collected at a plurality of measurement angular positions. Measured offset data is collected during continuous rotation of the shafts in their normal direction of rotation or at convenient positions where the rotation is halted. Measured offset data may be collected at as few as three angular positions, but preferably is collected at more than three angular positions, and typically at a multiplicity of angular positions such as thirty or forty. A respective sine function is fit to each set of measured offset data. Data for the traditional 0°, 90°, 180° and 270° angular positions are then determined from the sine function. This data is thus determined in an indirect predictive manner, and is used in subsequent calculations to determine machine moves as though the calculation data had been determined by direct measurement at the 0°, 90°, 180° and 270° angular positions.

However, the above methods may only be used to align rotating shafts of rotary machines where the rotating shafts do not move in their respective axial directions. Accordingly, there exists a need to provide a solution to solve the aforesaid problems.

The present invention provides a method that may be used to align rotating shafts of rotary machines with axial movements.

According to claim 1, the method of aligning rotating shafts of rotary machines according to the present invention includes: providing a first rotating shaft, wherein a first flange is provided at an end of the first rotating shaft; providing a second rotating shaft, wherein a second flange is provided at an end of the second rotating shaft; positioning a first gauge at a 12 o'clock position of the first flange; positioning a second gauge at a 6 o'clock position of the first flange; measuring a first distance from the first gauge to a surface of the second flange, wherein the first distance is defined as a distance of A0; measuring a second distance from the second gauge to the surface of the second flange, wherein the second distance is defined as a distance of B0; rotating the first and second flanges with 180 degrees; measuring a third distance from the first gauge to the surface of the second flange, wherein the third distance is defined as a distance of A2; measuring a fourth distance from the second gauge to the surface of the second flange, wherein the fourth distance is defined as a distance of B2; and according to a difference between (A2+B0) and (A0+B2), adjusting the second flange such that the distance from a 6 o'clock position of the second flange to a surface of the first flange is equal to the distance from a 12 o'clock position of the second flange to the surface of the first flange.

The foregoing, as well as additional objects, features and advantages of the invention will be more readily apparent from the following detailed description, which proceeds with reference to the accompanying drawings.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings

Fig. 1     shows two conventional rotary machines;

Fig. 2     shows a method of aligning rotating shafts of two rotary machines, and

Fig. 3     shows the method of aligning rotating shafts of rotary machines according to the present invention.

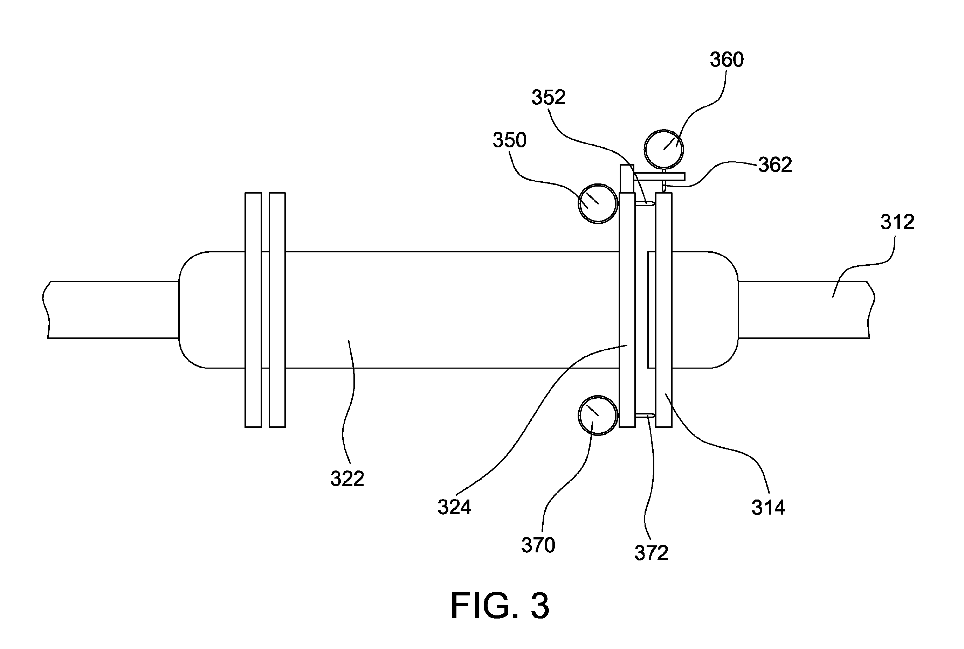

Referring to Fig. 3, the method of aligning rotating shafts of rotary machines with each other according to the present invention is to connect two gauges 350, 360 to a flange 324 at the rear end of a rotating shaft 322. It is arranged that the probe 362 of the gauge 360 is in contact with the lateral surface of a circular flange 314 at the rear end of another rotating shaft 312 and the probe 352 of the gauge 350 is in contact with the front surface of the flange 314. Afterward, the gauges 350, 360 are positioned to be topmost. It may be called that both the gauge 350, 360 are at 12 o'clock position. At this position the gauges 350, 360 have readout values of A0 and R0, respectively. In addition, a gauge 370 is connected to the flange 324 at the bottommost position, said 6 o'clock position. It is arranged that the probe 372 of the gauge 370 is in contact with the front surface of the flange 314. At the 6 o'clock position the gauge 370 has a readout value of B0.

Next, the rotating shafts 322, 312 are rotated with 90 degrees. For example, the rotating shafts 322, 312 are rotated clockwise with 90 degrees. It may be called that the gauges 350, 360 are at 3 o'clock position and the gauge 370 is at 9 o'clock position. At such positions the gauges 350, 360 have readout values of A1 and R1, respectively and the gauge 370 has a readout value of B1. Subsequently, the rotating shafts 322, 312 are rotated clockwise with another 90-degree. It may be called that the gauges 350, 360 are at 6 o'clock position and the gauge 370 is at 12 o'clock position. At such positions the gauges 350, 360 have readout values of A2 and R2, respectively and the gauge 370 has a readout value of B2. Finally, the rotating shafts 322, 312 are rotated clockwise with 90 degrees again. It may be called that the gauges 350, 360 are at 9 o'clock position and the gauge 370 is at 3 o'clock position. At such positions the gauges 350, 360 have readout values of A3 and R3, respectively and the gauge 370 has a readout value of B3.

According to the method of the present invention, the difference between the R0 and R2 indicates a shift of the center of the flange 314 with respect to the center of the flange 324 in the vertical direction. If the R2 is greater than the R0, it indicates that the center of the flange 314 has a downward shift with respect to the center of the flange 324. An upward shift in a distance of (R2-R0)/2 may be exerted on the flange 314 to correct such a downward shift. However, when the R0 is greater than the R2, it indicates that the center of the flange 314 has an upward shift with respect to the center of the flange 324. Therefore, a downward shift in a distance of (R0-R2)/2 may be exerted on the flange 314 to correct such an upward shift. Similarly, the difference between the R1 and R3 indicates a shift of the center of the flange 314 with respect to the center of the flange 324 in the horizontal direction. When the R3 is greater than the R1, it indicates that the center of the flange 314 has a leftward shift with respect to the center of the flange 324. A rightward shift in a distance of (R3-R1)/2 may be exerted on the flange 314 to correct such a leftward shift. However, when the R1 is greater than the R3, it indicates that the center of the flange 314 has a rightward shift with respect to the center of the flange 324. Therefore, a leftward shift in a distance of (R1-R3)/2 may be exerted on the flange 314 to correct such a rightward shift.

According to the method of the present invention, when the (A0+B2) is not equal to (A2+B0), it indicates that the front surface of the flange 314 is not parallel to the front surface of the flange 324. When the (A2+B0) is greater than the (A0+B2), it indicates that the 6 o'clock position of the front surface of the flange 314 is closer to the front surface of the flange 324 than the 12 o'clock position of the front surface of the flange 314. To have the front surface of the flange 314 parallel to the front surface of the flange 324, the flange 314 may be adjusted in such a manner that the 12 o'clock position keeps unmoved and the 6 o'clock position is moved away from the front surface of the flange 324 in a distance of [(A2+B0)-(A0+B2)]/2. Alternatively, the flange 314 may be adjusted such that the 6 o'clock position keeps unmoved and the 12 o'clock position is moved close to the front surface of the flange 324 in the distance of [(A2+B0)-(A0+B2)]/2. We may also adjust the flange 314 such that the center of the flange 314 keeps unmoved and the 12 o'clock position is moved close to the front surface of the flange 324 in the distance of [(A2+B0)-(A0+B2)]/4 and the 6 o'clock position is moved away from the front surface of the flange 324 in the distance of [(A2+B0)-(A0+B2)]/4. These may be explained in detail below.

When the rotating shafts 312 and 322 do not move in their respective axial directions, it should be appreciated that the difference between the readout values of the A2 and A0 is equal to the difference between the readout values of the B0 and B2 since the gauge 370 is positioned opposite to the gauge 350. That is to say, (A2-A0) should be equal to (B0-B2). This indicates that the flange 314 is inclined to the flange 324 in a distance of [(A2-A0)+(B0-B2)]/2 in a direction from the 12 o'clock position to the 6 o'clock position. However, when the rotating shaft 322 has a movement in the axial direction, the difference between the A2 and A0 or the difference between the B0 and B2 cannot show how the flange 314 is inclined to the flange 324. This is because each of the readout values of the A2 and B2 contains the axial movement of the flange 324 when the flange 324 has been rotated for 180 degrees. It is assumed that the flange 324 has undergone an axial movement in a distance of d when the flange 324 is rotated for 180 degrees. Therefore, an equation may be obtained:

$$[(A2-d)-A0]=[B0-(B2-d)]$$

From the above equation, we can obtain

$$d = (A2-A0-B0+B2)/2$$

Therefore, the flange 314 is inclined to the flange 324 in the direction from the 12 o'clock position to the 6 o'clock position in a distance of

$$A2-d-A0 = A2-(A2-A0-B0+B2)/2-A0$$

$$= [(A2-A0)+(B0-B2)]/2$$

When the (A0+B2) is greater than the (A2+B0), it indicates that the 12 o'clock position of the front surface of the flange 314 is closer to the front surface of the flange 324 than the 6 o'clock position of the front surface of the flange 314. To have the front surface of the flange 314 parallel to the front surface of the flange 324, the flange 314 may be adjusted in such a manner that the 6 o'clock position keeps unmoved and the 12 o'clock position is moved away from the front surface of the flange 324 in a distance of [(A0+B2)-(A2+B0)]/2. Alternatively, the flange 314 may be adjusted such that the 12 o'clock position keeps unmoved and the 6 o'clock position is moved close to the front surface of the flange 324 in the distance of [(A0+B2)-(A2+B0)]/2. We may also adjust the flange 314 such that the center of the flange 314 keeps unmoved and the 12 o'clock position is moved away from the front surface of the flange 324 in the distance of [(A0+B2)-(A2+B0)]/4 and the 6 o'clock position is moved close to the front surface of the flange 324 in the distance of [(A0+B2)-(A2+B0)]/4.

Similarly, when the (A3+B1) is greater than the (A1+B3), it indicates that the 9 o'clock position of the front surface of the flange 314 is closer to the front surface of the flange 324 than the 3 o'clock position of the front surface of the flange 314. To have the front surface of the flange 314 parallel to the front surface of the flange 324, the flange 314 may be adjusted in such a manner that the 3 o'clock position keeps unmoved and the 9 o'clock position is moved away from the front surface of the flange 324 in a distance of [(A3+B1)-(A1+B3)]/2. Alternatively, the flange 314 may be adjusted such that the 9 o'clock position keeps unmoved and the 3 o'clock position is moved close to the front surface of the flange 324 in the distance of [(A3+B1)-(A1+B3)]/2. We may also adjust the flange 314 such that the center of the flange 314 keeps unmoved and the 3 o'clock position is moved close to the front surface of the flange 324 in the distance of [(A3+B1)-(A1+B3)]/4 and the 9 o'clock position is moved away from the front surface of the flange 324 in the distance of [(A3+B1)-(A1+B3)]/4. If the (A1+B3) is greater than the (A3+B1), it indicates that the 3 o'clock position of the front surface of the flange 314 is closer to the front surface of the flange 324 than the 9 o'clock position of the front surface of the flange 314. To have the front surface of the flange 314 parallel to the front surface of the flange 324, the flange 314 may be adjusted in such a manner that the 9 o'clock position keeps unmoved and the 3 o'clock position is moved away from the front surface of the flange 324 in a distance of [(A1+B3)-(A3+B1)]/2. Alternatively, the flange 314 may be adjusted such that the 3 o'clock position keeps unmoved and the 9 o'clock position is moved close to the front surface of the flange 324 in the distance of [(A1+B3)-(A3+B1)]/2. We may also adjust the flange 314 such that the center of the flange 314 keeps unmoved and the 3 o'clock position is moved away from the front surface of the flange 324 in the distance of [(A1+B3)-(A3+B1)]/4 and the 9 o'clock position is moved close to the front surface of the flange 324 in the distance of [(A1+B3)-(A3+B1)]/4.

It should be appreciated that it is an object of the present invention to have the flanges 314 and 324 parallel to each other. Therefore, the distance from the 12 o'clock position of the front surface of the flange 314 to the front surface of the flange 324 should be equal to the distance from the 6 o'clock position of the front surface of the flange 314 to the front surface of the flange 324 when the flanges 314 and 324 have been adjusted to be parallel to each other. In other words, the value of the [(A2+B0)-(A0+B2)] should be equal to zero when the flanges 314 and 324 are parallel to each other. Similarly, the value of the [(A3+B1)-(A1+B3)] should also be equal to zero because the distance from the 9 o'clock position of the front surface of the flange 314 to the front surface of the flange 324 is equal to the distance from the 3 o'clock position of the front surface of the flange 314 to the front surface of the flange 324. In view of the above, it is the object of the present invention to adjust the flanges 314 and 324 such that both the values of [(A2+B0)-(A0+B2)] and [(A3+B1)-(A1+B3)] are equal to zero. Therefore, only figuring out the value of the [(A2+B0)-(A0+B2)] or the value of the [(A3+B1)-(A1+B3)] alone is not enough to know whether the flanges 314 and 324 have be adjusted to be parallel to each other. It is required that both the values of the [(A2+B0)-(A0+B2)] and [(A3+B1)-(A1+B3)] are equal to zero when the flanges 314 and 324 are parallel to each other.

According to the present invention, the method of the present invention may be used to align rotating shafts of rotary machines with axial movements. In addition, although the gauges of contacting type are used to describe the present invention, it will be appreciated that laser alignment gauges may be used to carry out the present invention.

Although the preferred embodiments of the invention have been disclosed for illustrative purposes, those skilled in the art will appreciate that various modifications, additions and substitutions are possible, without departing from the scope of the invention as disclosed in the accompanying claims.

List of reference signs

| 110 | rotary machine |
| 112 | rotating shaft |
| 114 | flange |
| 120 | rotary machine |
| 122 | rotating shaft |
| 124 | flange |
| 150 | gauge |
| 152 | probe |
| 160 | gauge |
| 162 | probe |
| 312 | rotating shaft |
| 314 | flange |
| 322 | rotating shaft |
| 324 | flange |
| 350 | gauge |
| 352 | probe |
| 360 | gauge |
| 362 | probe |
| 370 | gauge |
| 372 | probe |

## Claims

1. A method of aligning rotating shafts of two rotary machines with each other, wherein one rotating shaft has an axial movement with respect to the other rotating shaft, the method comprising:

   providing a first rotating shaft (322), wherein a first flange (324) is provided at an end of the first rotating shaft (322);
   providing a second rotating shaft (312), wherein a second flange (314) is provided at an end of the second rotating shaft (312);
   positioning a first gauge (350) at a 12 o'clock position of the first flange (324);
   positioning a second gauge (370) at a 6 o'clock position of the first flange (324);
   measuring a first distance from the first gauge (350) to a surface of the second flange (314), wherein the first distance is defined as a distance of A0;
   measuring a second distance from the second gauge (370) to the surface of the second flange (314), wherein the second distance is defined as a distance of B0;
   rotating the first flange (324) and the second flange (314) with 180 degrees;
   measuring a third distance from the first gauge (350) to the surface of the second flange (314), wherein the third distance is defined as a distance of A2;
   measuring a fourth distance from the second gauge (370) to the surface of the second flange (314), wherein the fourth distance is defined as a distance of B2; and
   according to a difference between (A2+B0) and (A0+B2), adjusting the second flange (314) such that the distance from a 6 o'clock position of the second flange (314) to a surface of the first flange (324) is equal to the distance from a 12 o'clock position of the second flange (314) to the surface of the first flange (324).

**2.** The method as claimed in claim 1, wherein when (A0+B2) is greater than (A2+B0), the 12 o'clock position of the second flange (314) is moved away from the surface of the first flange (324) in a distance of [(A0+B2)-(A2+B0)]/2.

**3.** The method as claimed in claim 1, wherein when (A0+B2) is greater than (A2+B0), the 6 o'clock position of the second flange (314) is moved close to the surface of the first flange (324) in a distance of [(A0+B2)-(A2+B0)]/2.

**4.** The method as claimed in claim 1, wherein when (A2+B0) is greater than (A0+B2), the 6 o'clock position of the second flange (314) is moved away from the surface of the first flange (324) in a distance of [(A2+B0)-(A0+B2)]/2.

**5.** The method as claimed in claim 1, wherein when (A2+B0) is greater than (A0+B2), the 12 o'clock position of the second flange (314) is moved close to the surface of the first flange (324) in a distance of [(A2+B0)-(A0+B2)]/2.

**Patentansprüche**

**1.** Verfahren zum Ausrichten von Drehwellen von zwei Drehmaschinen miteinander, wobei eine Drehwelle eine Axialbewegung in Bezug auf die andere Drehwelle hat, wobei das Verfahren umfasst:

Vorsehen einer ersten Drehwelle (322), wobei ein erster Flansch (324) an einem Ende der ersten Drehwelle (322) vorgesehen ist;
Vorsehen einer zweiten Drehwelle (312), wobei ein zweiter Flansch (314) an einem Ende der zweiten Drehwelle (312) vorgesehen ist;
Positionieren einer ersten Messlehre (350) an einer 12-Uhr-Position des ersten Flansches (324);
Positionieren einer zweiten Messlehre (370) an einer 6-Uhr-Position des ersten Flansches (324);
Messen eines ersten Abstandes von der ersten Messlehre (350) zu einer Oberfläche des zweiten Flansches (314), wobei der erste Abstand als Abstand A0 definiert ist;
Messen eines zweiten Abstandes von der zweiten Messlehre (370) zu der Oberfläche des zweiten Flansches (314), wobei der zweite Abstand als Abstand B0 definiert ist;
Verdrehen des ersten Flansches (324) und zweiten Flansches (314) um 180 Grad;
Messen eines dritten Abstandes von der ersten Messlehre (350) zu der Oberfläche des zweiten Flansches (314), wobei der dritte Abstand als Abstand A2 definiert ist;
Messen eines vierten Abstandes von der zweiten Messlehre (370) zu der Oberfläche des zweiten Flansches (314), wobei der vierte Abstand als Abstand B2 definiert ist; und
Einstellen des zweiten Flansches (314) entsprechend einer Differenz zwischen (A2+B0) und (A0+B2), sodass der Abstand von einer 6-Uhr-Position des zweiten Flansches (314) zu einer Oberfläche des ersten Flansches (324) gleich dem Abstand von einer 12-Uhr-Position des zweiten Flansches (314) zu der Oberfläche des ersten Flansches (324) ist.

**2.** Verfahren nach Anspruch 1, worin, wenn (A0+B2) größer ist als (A2+B09), die 12-Uhr-Position des zweiten Flansches (314) von der Oberfläche des ersten Flansches (324) um einen Abstand von [(A0+B2)-(A2+B0)]/2 wegbewegt wird.

**3.** Verfahren nach Anspruch 1, worin, wenn (A02+B2) größer ist (A2+B0), die 6-Uhr-Position des zweiten Flansches (314) nahe bei der Oberfläche des ersten Flansches (324) um einen Abstand [(A0+B2)-(A2+B0)]/2 bewegt wird.

**4.** Verfahren nach Anspruch 1, worin, wenn (A2+B0) größer ist als (A0+B2), die 6-Uhr-Position des zweiten Flansches (314) von der Oberfläche des ersten Flansches (324) um einen Abstand {(A2+B0)-(A0+B2)]/2 wegbewegt wird.

**5.** Verfahren nach Anspruch 1, worin, wenn (A2+B0) größer ist als (A0+B2), die 12-Uhr-Position des zweiten Flansches (314) nahe an der Oberfläche des ersten Flansches (324) um einen Abstand [(A2+B0)-(A0+B2)]/2 bewegt wird.

**Revendications**

**1.** Procédé d'alignement d'arbres rotatifs de deux machines rotatives les uns avec les autres, où un arbre rotatif a un mouvement axial à l'égard de l'autre arbre rotatif, le procédé comprenant:

- pourvoir un premier arbre rotatif (322), où une première flasque (324) est pourvue à une extrémité du premier arbre rotatif (322);
- pourvoir un second arbre rotatif (312), où une seconde flasque (314) est pourvue à une extrémité du second arbre rotatif (312);
- positionner un premier appareil de mesure (350) à la position d"heure 12 de la première flasque (324);
- positionner un second appareil de mesure (370) à la position d"heure 6 de la première flasque (324);
- mesurer une première distance à partir du premier appareil de mesure (350) à une surface de la seconde flasque (314)), où la première distance est définie comme une distance A0;
- mesurer une seconde distance à partir du second appareil de mesure (370) à la surface de la seconde flasque (314)), où la seconde distance est définie comme une distance B0;
- tourner la première flasque (324) et la seconde flasque (314) avec 180 degrés;
- mesurer une troisième distance à partir du premier appareil de mesure (350) à la surface de la seconde flasque (314)), où la troisième distance est définie comme une distance A2; et
- mesurer une quatrième distance à partir du second appareil de mesure (370) à la surface de la seconde flasque (314)), où la quatrième distance est définie comme une distance B2; et
- conforme à une différence entre (A2+B0) et (A0+B2), ajuster la seconde flasque (314) de sorte que la distance à partir de la position d'heure 6 de la seconde flasque (314) à une surface de la première flasque (324) soit égale à la distance à partir de la position d'heure 12 de la seconde flasque (314) à la surface de la première flasque (324).

2. Procédé selon la revendication 1, où quand (A0+B2) est plus grande que (A2+B0), la position d'heure 12 de la seconde flasque (314) est déplacée loin de la surface de la première flasque (324) sur une distance de [(A0+B2)-(A2+B0)]/2.

3. Procédé selon la revendication 1, où quand (A0+B2) est plus grande que (A2+B0), la position d'heure 6 de la seconde flasque (314) est déplacée près de la surface de la première flasque (324) sur une distance de [(A0+B2)-(A2+B0)]/2.

4. Procédé selon la revendication 1, où quand (A2+B0) est plus grande que (A0+B2), la position d'heure 6 de la seconde flasque (314) est déplacée loin de la surface de la première flasque (324) sur une distance de [(A2+B0)-(A0+B2)]/2.

5. Procédé selon la revendication 1, où quand (A2+B0) est plus grande que (A0+B2), la position d'heure 12 de la seconde flasque (314) est déplacée près de la surface de la première flasque (324) sur une distance de [(A2+B0)-(A0+B2)]/2.

FIG. 1 (PRIOR ART)

FIG. 2 (PRIOR ART)

FIG. 3

EP 2 562 511 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 3911307 A1
- US 4586264 A
- US 5263261 A

### Non-patent literature cited in the description

- ALIGNING SHAFTS PART I - MEASURING MIS-ALIGNMENT. **DURKIN D.** PLANT ENGINEERING. CAHNERS PUB, 11 January 1979, 102-105
- ALIGNING SHAFTS PART II - CORRECTING MIS-ALIGNMENT. **DURKIN D.** PLANT ENGINEERING. CAHNERS PUB, 08 February 1979, 102-105